# EUROPEAN PATENT SPECIFICATION

(11) **EP 3 485 440 B1**
(45) Date of publication and mention of the grant of the patent: **19.04.2023**
(21) Application number: 17746249.6
(22) Date of filing: 17.07.2017
(51) Int. Cl.: G06Q 10/08

(54) **COLD CHAIN IN-TRANSIT EXCHANGE OF PERISHABLE GOODS**
KÜHLKETTENAUSTAUSCH VON VERDERBLICHEN GÜTERN WÄHREND DES TRANSPORTS
ÉCHANGE DE DENRÉES PÉRISSABLES EN TRANSIT SUR UNE CHAÎNE DE FROID

(30) Priority: 18.07.2016 US 201662363599 P
(43) Date of publication of application: 22.05.2019
(73) Proprietor: Carrier Corporation, Jupiter, FL 33478 (US)
(72) Inventor: POOLMAN, Ciara, Syracuse, New York 13057 (US); CHOPKO, Robert A., Baldwinsville, New York 13027 (US); BEASLEY, Marc, Beverly, Massachusetts 01915 (US)
(74) Representative: Dehns
(86) International application number: PCT/US2017/042321
(87) International publication number: WO 2018/017450

(56) References cited:
- US-A1- 2005 248 455
- US-A1- 2014 041 532
- US-B1- 7 455 225

## Description

The embodiments disclosed herein generally relate to cold chain distribution systems, and more specifically to an apparatus and a method for managing a transport refrigeration unit within a cold chain distribution system.

Typically, cold chain distribution systems are used to transport and distribute perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trucks and trailers are commonly used to transport perishable goods in a cold chain distribution system. For example, transport refrigeration systems are mounted to the truck or to the trailer in operative association with a cargo space defined within the truck or trailer for maintaining a controlled temperature environment within the cargo space, and therefore maintaining a quality of perishable goods. The document US7455225B1 discloses a system and a method for facilitating a cold chain in-transit exchange of perishable goods.

Currently, when a lower quality good (e.g., mishandling) is received or when the quality of perishable goods degrades (e.g., damaged through improper cooling by the transport refrigeration systems), the perishable goods are either sold as is or scrapped by customer. There is no model for a cold chain in-transit exchange of perishable goods based on market conditions, weather, shelf life, etc.

According to an aspect there is provided a system for facilitating a cold chain in-transit exchange of perishable goods, the system comprising: a transport refrigeration system for the perishable goods comprising an environmentally controlled container, a transport refrigeration unit associated with the container to provide desired environmental parameters, and sensors configured to monitor transport parameters internal and external to the container and/or the transport refrigeration unit, wherein the transport parameters comprise one or more of temperature, pressure, humidity, carbon dioxide, ethylene, ozone, light exposure, speed, location, external temperature and vibrations; a storage device configured to store data associated with the perishable goods, wherein the data comprises the transport parameters; a management sub-system comprising a processor and a memory, the management sub-system coupled to the storage device, wherein the management sub-system is configured to: receive an input comprising the data associated with the perishable goods, perform a quality assessment utilizing the input during a transit period wherein the perishable goods are in-transit to an original destination in the transport refrigeration system, determine whether the cold chain in-transit exchange of the perishable goods should occur based on the quality assessment, post the perishable goods for subsequent sale in response to determining that the cold chain in-transit exchange of the perishable goods should occur, and reroute the transport refrigeration system to a second destination in response to a subsequent sale of the perishable goods.

Optionally, the management sub-system can be configured to decrement a grade of the perishable goods in response to determining that the cold chain in-transit exchange of the perishable goods should occur.

Optionally, the grade of the perishable goods can indicate a present quality of the goods.

Optionally, the data can comprise historical transport parameters and perishable goods history .

Optionally, the perishable goods can comprise one or more of fruits, vegetables, grains, beans, nuts, eggs, dairy, seed, flowers, meat, poultry, fish, ice, blood, and pharmaceuticals.

Optionally, the management sub-system can comprise a diagnostic module configured to perform the quality assessment utilizing the data based on when one or more spoil conditions are present.

Optionally, the management sub-system can comprise a predictive module configured to perform the quality assessment utilizing the data based on when a future need for the cold chain in-transit exchange is present.

Optionally, the management sub-system can comprise a remaining life module configured to perform the quality assessment utilizing the data based on when a remaining life of the perishable goods indicates spoiling prior to or soon after delivery to an original destination.

According to another aspect there is provided a method for facilitating a cold chain in-transit exchange of perishable goods, the method comprising: monitoring, using sensors, transport parameters internal and external to an environmentally controlled container and/or a transport refrigeration unit of a transport refrigeration system for the perishable goods, wherein the transport parameters comprise one or more of temperature, pressure, humidity, carbon dioxide, ethylene, ozone, light exposure, speed, location, external temperature and vibrations; storing, using a storage device, data associated with the perishable goods, wherein the data comprises the transport parameters; receiving, by a management sub-system comprising a processor and a memory, an input comprising the data associated with the perishable goods, wherein the management sub-system comprises a processor and a memory and is coupled to the storage device; performing, by the management sub-system, a quality assessment utilizing the input during a transit period wherein the perishable goods are in-transit to an original destination in the transport refrigeration system; determining whether the cold chain in-transit exchange of the perishable goods should occur based on the quality assessment; posting, by the management sub-system, the perishable goods for subsequent sale in response to determining that the cold chain in-transit exchange of the perishable goods should occur; and rerouting the transport refrigeration system to a second destination in response to a subsequent sale of the perishable goods.

Optionally, the method can comprise decrementing a grade of the perishable goods in response to determining that the cold chain in-transit exchange of the perishable goods should occur.

Optionally, the grade of the perishable goods can indicate a present quality of the goods.

Optionally, the data can comprise historical transport parameters and perishable goods history.

Optionally, the perishable goods can comprise one or more of fruits, vegetables, grains, beans, nuts, eggs, dairy, seed, flowers, meat, poultry, fish, ice, blood, and pharmaceuticals.

Optionally, the method can comprise performing, by a diagnostic module of the management sub-system, the quality assessment utilizing the data based on when one or more spoil conditions are present.

Optionally, the method can comprise performing, by a predictive module of the management sub-system, the quality assessment utilizing the data based on when a future need for the cold chain in-transit exchange is present.

Optionally, the method can comprise performing, by a remaining life module of the management sub-system, the quality assessment utilizing the data based on when a remaining life of the perishable goods indicates spoiling prior to or soon after delivery to an original destination.

Other aspects, features, and techniques will become more apparent from the following description taken in conjunction with the drawings.

The subject matter which is regarded as the disclosure is particularly pointed out and distinctly claimed in the claims at the conclusion of the specification. The foregoing and other features and advantages of the disclosure are apparent from the following detailed description of example embodiments taken in conjunction with the accompanying drawings in which:
FIG. 1 illustrates a schematic view of a cold chain distribution system; and
FIG. 2 illustrates a process flow of a marketplace and bidding mechanism; and
FIG. 3 illustrates another process flow of a marketplace and bidding mechanism.

In general, the disclosure herein relates to a system, method, and/or computer program product (herein collectively referred as the 'system') that facilitates a cold chain in-transit exchange of perishable goods. The system includes a marketplace and bidding mechanism, where multiple parties can sell, purchase, and/or reroute perishable goods before they spoil or arrive at (e.g., while in transit to) an original destination. The marketplace and bidding mechanism can utilize weather, hedging based logistics, and road changes to automatically identify the risk of whether a quality of perishable goods is not going to meet requirements upon arrival at the original destination. The marketplace and bidding mechanism can, in turn, suggest whether to reroute shipments of perishable goods to support the selling, purchasing, and/or rerouting of perishable goods. In this way, the system provides a holistic understanding and analysis of perishable goods moving through the cold chain process (e.g., from harvest to consumption).

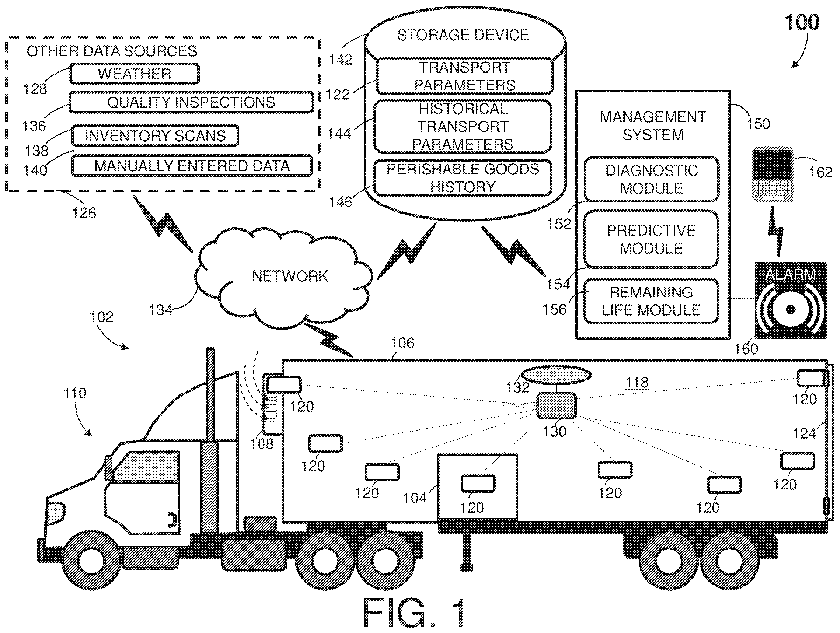

Referring now to the drawings, FIG. 1 illustrates a schematic view of a cold chain distribution system 100 according to an embodiment of the present disclosure. Typically, a transport refrigeration system 102 is used to transport and distribute perishable goods and environmentally sensitive goods (herein referred to as perishable goods 104). According to the invention, the transport refrigeration system 102 includes an environmentally controlled container 106, a transport refrigeration unit 108 and perishable goods 104. The container 106 may be pulled by a tractor 110. It is understood that embodiments described herein may be applied to shipping containers that are shipped by rail, sea, or any other suitable container, without use of a tractor 110. The container 106 may define an interior compartment 112.

According to the invention, the transport refrigeration unit 108 is associated with a container 106 to provide desired environmental parameters, such as, for example temperature, pressure, humidity, carbon dioxide, ethylene, ozone, light exposure, vibration exposure, and other conditions to the interior compartment 112. In further embodiments, the transport refrigeration unit 108 is a refrigeration system capable of providing a desired temperature and humidity range that reflect normal condition (e.g., non-spoiling conditions) for the perishable goods 104.

The perishable goods 104 may include but are not limited to fruits, vegetables, grains, beans, nuts, eggs, dairy, seed, flowers, meat, poultry, fish, ice, blood, pharmaceuticals, or any other suitable cargo requiring cold chain transport. The perishable goods 104 can be assigned a grade, which indicates a present quality of the goods. The grade can be any scale ranging from spoiled to high quality. The scale can be alpha-numerical (e.g., 0 to 5; A to E; etc.), where each increment indicates the present quality on the scale. For instance, Grade A perishable goods 104 can be of the highest quality fit for human consumption, while Grade C can be a lower quality good fit for human consumption and Grade E can spoiled goods that should be scrapped or is fit for animal feed (each case indicating that the perishable goods 104 are destined for resale at a reduced price). The grade can also be affected according on other data 126 (as described below), such as an appearance or presence of mold, physical damage, color, indication of ripeness, firmness, weight (e.g., water content), flavor, use of certain pesticides.

According to the invention, the transport refrigeration system 102 includes sensors 120. The sensors 120 may be utilized to monitor transport parameters 122 internal and external to the container 106 and/or the transport refrigeration unit 108. The transport parameters 122 monitored by the sensors 120 may include but are not limited to temperature, pressure, humidity, carbon dioxide, ethylene, ozone, light exposure, vibrations, and other conditions of the perishable goods 104. The transport parameters 122 monitored by the sensors 120 can also include speed, location, external temperature, and other conditions of the transport refrigeration system 102. Accordingly, suitable sensors 120 are utilized to monitor the desired parameters. Advantageously, sensors 120 may be selected for certain applications depending on the perishable cargo to be monitored and the corresponding environmental sensitivities. In an embodiment, temperatures are monitored. In certain embodiments, a user desires to maintain and monitor temperatures or other parameters within an acceptable range. As seen in FIG. 1, the sensors 120 may be placed directly on the perishable goods 104.

Further, as in the illustrated embodiment, sensors 120 may be used to monitor various transport parameters 122 of the transport refrigeration system 102. These sensors 120 may be placed in a variety of locations including but not limited to on the transport refrigeration unit 108, on a door 124 of the container 106 and throughout the interior compartment 112. The sensors 120 may be placed directly within the transport refrigeration unit 108 to monitor the performance of the transport refrigeration unit 108. Individual components internal to the transport refrigeration unit 108 may also be monitored by sensors 120 to detect performance aspects, such as, for example usage cycles, duration, temperatures and pressure of individual components. As seen, the sensors 120 may also be placed on the door 124 of the container 106 to monitor the position of the door 124. Whether the door 124 is open or closed affects both the temperature of the container 106 and the performance of the transport refrigeration unit 108. For instance, in hot weather, an open door 124 will allow cooled air to escape from the container 106, causing the temperature of the interior compartment 112 to rise, which creates additional stress on the transport refrigeration unit 108 by forcing the transport refrigeration unit 108 to work harder to cool the interior compartment 112. Additionally, the global positioning system (GPS) location may also be detected by the sensors 120. The GPS location may help in providing information from other data sources 126 regarding local weather 128 (including solar gain) experienced by the container 106 along the travel route. The local weather 128 affects the temperature of the container 106 and thus affects the operation on the transport refrigeration unit 108. For instance, the transport refrigeration unit 108 may have to work harder on a container 106 travelling through a desert that is exposed to long period of heat and solar gain.

As illustrated in FIG. 1, the transport refrigeration system 102 may further include, a controller 130 configured to log a plurality of readings from the sensors 120, known as transport parameters 122, at a selected sampling rate. The controller 130 may be enclosed within the transport refrigeration unit 108 or separate from the transport refrigeration unit 108 as illustrated. The transport parameters 122 may further be augmented with time, position stamps, or other relevant information. The controller 130 may also include a processor (not shown) and an associated memory (not shown). The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

In an illustrated embodiment, the transport refrigeration system 102 may include a communication module 132 in operative communication with the controller 130 and in wireless operative communication with a network 134. The communication module 132 is configured to transmit the transport parameters 122 to the network 134 via wireless communication. The wireless communication may be, but is not limited to, radio, microwave, cellular, satellite, or another wireless communication method. The network 134 may be but is not limited to satellite networks, cellular networks, cloud computing network, wide area network, or another type of wireless network. The communication module 132 may include a short range interface, wherein the short range interface includes at least one of: a wired interface, an optical interface, and a short range wireless interface.

Transport parameters 122 may also be provided by other data sources 126, as illustrated in FIG.1. These other data sources 126 may be collected at any point throughout the cold chain distribution system 100, which may include harvest, packing, storage prior to transport, transport to distribution center, distribution center, transport to display, storage prior to display, display, and consumer. These stages are provided for illustrative purposes and a distribution chain may include fewer stages or additional stages, such as, for example a cleaning stage, a processing stage, and additional transportation stages. The other data sources 126 may include, but are not limited to, weather 128, quality inspections 136, inventory scans 138, and manually entered data 140. The other data sources 126 may also include supply chain that can delay or put cargo at risk, such as road conditions, sea port delays due to strikes or accidents, problems at critical junctures like the Suez or Panama Canals, air travel stopped or rerouted due to volcanic activity, border crossings delays, etc.

The weather 128, as discussed above, has an effect on the operation of the transport refrigeration unit 108 by influencing the temperature of the container 106 during transport. The weather 128 also has other influences on the transport refrigeration unit 108. For instance, the weather 128 prior to and at harvest may have an impact on the quality of the perishable goods 104, which in turn would affect how hard the transport refrigeration unit 108 must work to preserve the perishable goods 104. Moreover, quality inspections 136, similar to the weather 128, may reveal data of the perishable goods 104 that may affect how hard the transport refrigeration unit 108 must work to preserve the perishable goods 104. Quality inspections 136 may be done by a machine or a human being. Quality inspections 136 performed by a machine may be accomplished using a variety of techniques including but not limited to optical, odor, soundwave, infrared, or physical probe.

Further inventory scans 138, may also reveal information about the perishable goods 104 that may affect how hard the transport refrigeration unit 108 must work to preserve the perishable goods 104. For instance, the inventory scan 138 may reveal a temperature of the distribution center where the perishable goods 104 were kept and thus the transport refrigeration unit 108 must either increase or decrease its output to bring the perishable goods 104 to the correct temperature. While the system 100 includes sensors 120 to aid in automation, often times the need for manual data entry is unavoidable. The manually entered data 140 may be input via a variety of devices including but not limited to a cellular phone, tablet, laptop, smartwatch, a desktop computer or any other similar data input device.

According to the invention, the cold chain distribution system 100 further includes a storage device 142 to store data associated with the transport refrigeration unit 108 and/or the perishable goods 104, such as the transport parameters 122. The data of the storage device 142 may also store historical transport parameters 144 and perishable goods history 146 of the transport refrigeration unit 108 and/or the perishable goods 104. The storage device 142 may be but is not limited to a random access memory (RAM), read only memory (ROM), or other electronic, optical, magnetic or any other computer readable medium.

According to the invention, the system 100 further includes a management sub-system 150 (e.g., a marketplace and bidding mechanism). As shown, the management sub-system 150 may include a diagnostic module 152, a predictive module 154, and a remaining life module 156. The management sub-system 150 may also include a processor (not shown) and an associated memory (not shown). The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The diagnostic module 152 determines a condition of the transport refrigeration unit 108 and/or the perishable goods 104 based on the data of the storage device 142, such as the transport parameters 122, historical transport parameters 144, and/or perishable goods history 146. The diagnostic module 152 may detect spoil conditions in the transport refrigeration unit 108 and provide an indication of the potential sources for the spoil conditions. Spoil conditions are environmental parameters that will cause the perishable goods 104 to be downgraded or spoil (be unacceptable for consumption) prior to or soon after delivery, thereby decreasing and/or removing the market value of the perishable goods 104. The diagnostic module 152 may compare the transport parameters 122 to thresholds, limits, ranges, etc. to detect the spoil conditions and then access historical transport parameters 144 and/or the perishable goods history 146 to derive one or more potential sources for the spoil conditions. The diagnostic module 152 activates an alarm 160 when a condition is, for example, outside of a selected range of conditions (e.g., when a spoil condition is present). The diagnostic module 152 can alter a grade of the perishable goods 104 when one or more spoil conditions are present and/or cause the management system 150 to suggest a cold chain in-transit exchange of perishable goods 104 when one or more spoil conditions are present.

The predictive module 154 determines a future need for cold chain in-transit exchange of perishable goods 104 based on the data of the storage device 142, such as the transport parameters 122. For example, the predictive module 154 determines environmental parameters that will eventually cause the perishable goods 104 to be downgraded or spoil prior to or soon after delivery. The predictive module 154 activates an alarm 160 when the future need for the cold chain in-transit exchange of perishable goods 104 is determined. The predictive module 154 may detect patterns in the transport parameters (e.g., patterns of high/low compressor outlet pressure) to predict spoiling. The predictive module 154 may also detect trends in the transport parameters 122, compare the transport parameters 122 to thresholds and/or determine rates of change in transport parameters 122 to determine the future need for the cold chain in-transit exchange of perishable goods 104. The existence of a series of alarm occurrences (e.g., over-pressure) may indicate the future need for the cold chain in-transit exchange of perishable goods 104. The predictive module 154 can alter a grade of the perishable goods 104 when the future need is present for the cold chain in-transit exchange of perishable goods 104 is determined and/or cause the management system 150 to suggest a cold chain in-transit exchange of perishable goods 104 when the future need is present.

The remaining life module 156 determines a remaining life of the perishable goods 104 based on the data of the storage device 142, such as the transport parameters 122. The remaining life module 156 activates an alarm 160 when the remaining life of the perishable goods 104 equals a selected grade. The remaining life module 156 may use a baseline life curve which provides remaining life as a function of time. The baseline life curve may be generated based on the historical transport parameters 144 and/or the perishable goods history 146. The baseline life curve may be adjusted or shifted in response to events or transport parameters 122 and/or the perishable goods history 146. For example, detection of operation under harsh high ambient conditions may reduce the remaining life. The remaining life module 156 can alter a grade of the perishable goods 104 when a remaining life of the perishable goods 104 indicates spoiling prior to or soon after delivery to an original destination and/or cause the management sub-system 150 to suggest a cold chain in-transit exchange of perishable goods 104 when the remaining life of the perishable goods 104 indicates spoiling prior to or soon after delivery to the original destination.

The diagnostic module 152, predictive module 154, and remaining life module 156 can utilize historical transport parameters 144 from other transport refrigeration units and the perishable goods history 146 of the current transport refrigeration unit 108 in their determinations. The historical transport parameters 144 may provide information such as, for example, life curves, failure rates, and a selected range of conditions for each component of the transport refrigeration unit 108. The selected range of conditions may define the normal operating conditions of component of the transport refrigeration unit 108 (e.g., which relate to non-spoiling conditions for the perishable goods 104). Operation outside of the selected range of conditions may indicate an issue with a component of the transport refrigeration unit 108, therefore possible spoiling conditions. The perishable goods history 146 may help indicate persistent issues with the perishable goods 104. The perishable goods history 146 may also help the predictive module 154 cause the management sub-system 150 to suggest the cold chain in-transit exchange of perishable goods 104.

The alarm 160 can be an alert sent to a user device 162 such as, for example, a cellular phone, tablet, laptop, smartwatch, desktop computer or any similar device. The alarm 160 may be an instantaneous alarm or a scheduled alarm for a later time. For instance, the predictive module 154 may predict that the perishable goods 104 should be scheduled for early delivery, so the predictive module 154 may schedule the alarm 160 to go off a little in advance of the early delivery. Whereas, if the diagnostic module 152 determines that the perishable goods 104 are currently outside a selected range of conditions, the diagnostic module 152 may activate the alarm 160 immediately to avoid spoiling. Therefore, the alarm 160 can cause the cold chain in-transit exchange of perishable goods 104.

Advantageously, as provided herein, the management sub-system 150 may help to better predict delivery schedules and reduce spoiling of the perishable goods 104. In some embodiments, advantageously, the management sub-system 150 may suggest re-routing transport refrigeration systems 102 so they do not embark on a journey that the transport refrigeration unit 108 cannot complete.

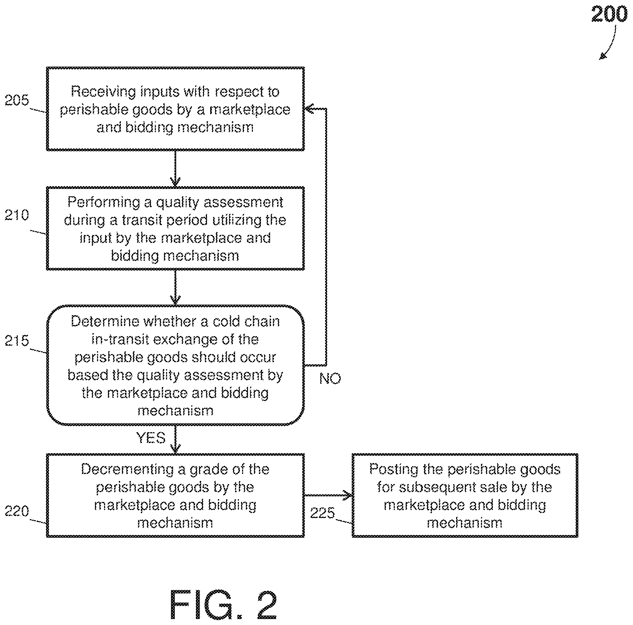

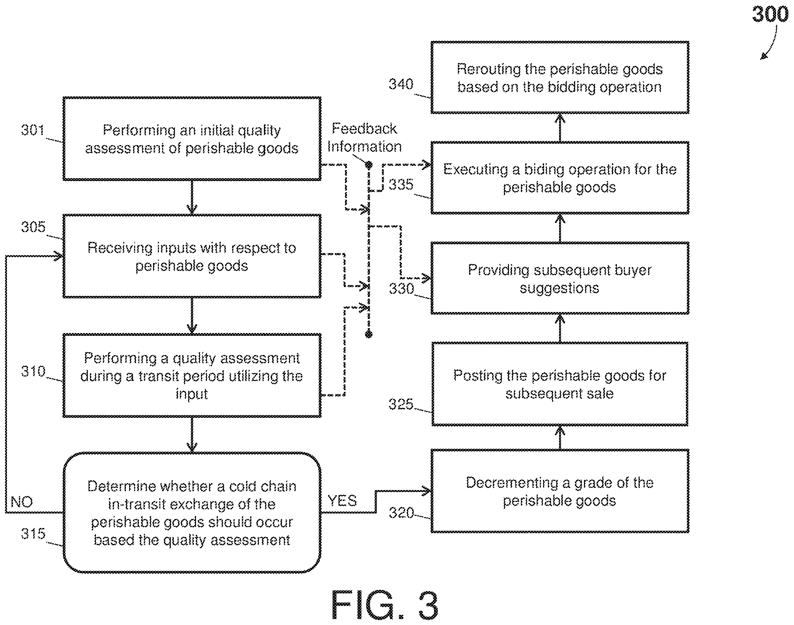

Operations of the management sub-system 150 will now be described with respect to FIGS. 2 and 3. FIG. 2 illustrates a process flow 200 of the management sub-system 150, operating as a marketplace and bidding mechanism, according to an embodiment. The process flow 200 begins at block 205, where inputs with respect to perishable goods are received by the marketplace and bidding mechanism. In an embodiment, the management sub-system 150 receives one or more inputs. The one or more inputs can comprise the data of the storage device 142, such as the above transport parameters 122, historical transport parameters 144, and/or perishable goods history 146. The receiving of the one or more inputs by the management sub-system 150 can include active pushing or pulling operations/communications by the management sub-system 150 to and from the sensors 120, the controller 130, the communication module 132, the storage device 142, and/or the other data sources 126.

At block 210, a quality assessment during a transit period utilizing the input of block 205 is performed by the marketplace and bidding mechanism. In an embodiment, the management sub-system 150 performs during the transit period the quality assessment. The transit period comprises a time period encasing the moving of the perishable goods 104 through the cold chain process (e.g., from harvest to consumption). The quality assessment is a monitoring by the diagnostic module 152, the predictive module 154, and the remaining life module 156 of the management sub-system 150 of the perishable goods 104 as described above. The monitoring can be a continuous or on-going, occur on scheduled instances, occur on random instances, and/or be user driven

At block 215, the marketplace and bidding mechanism determines whether a cold chain in-transit exchange of the perishable goods should occur based the quality assessment. In an embodiment, the management sub-system 150 utilizes the diagnostic module 152, the predictive module 154, and the remaining life module 156 to make the cold chain in-transit exchange determination in real-time (e.g., utilizes weather, hedging based logistics, and road changes to automatically identify if a quality of perishable goods 104 is not going to meet requirements upon arrival at an original destination). For instance, the management system 150 utilizes the diagnostic module 152 to suggest a cold chain in-transit exchange of perishable goods 104 when one or more spoil conditions are present. Further, the management sub-system 150 utilizes the predictive module 154 to suggest a cold chain in-transit exchange of perishable goods 104 when the future need is present. Furthermore, the management sub-system 150 utilizes the remaining life module 156 to suggest a cold chain in-transit exchange of perishable goods 104 when a remaining life of the perishable goods 104 indicates spoiling prior to or soon after delivery to the original destination.

As shown in FIG. 2, if the cold chain in-transit exchange of the perishable goods is not required according to the determination of block 215, the process flow 200 loops back to block 205 (as indicated by the 'NO' arrow). However, if the cold chain in-transit exchange of the perishable goods is required, the process flow 200 proceeds to block 220 (as indicated by the `YES' arrow).

At block 220, the marketplace and bidding mechanism decrements a grade of the perishable goods. In an embodiment, the management sub-system 150 utilizes the diagnostic module 152, the predictive module 154, and the remaining life module 156 to make the grade determination. For instance, the management sub-system 150 utilizes the diagnostic module 152 to alter a grade of the perishable goods 104 when one or more spoil conditions are present. Further, the management sub-system 150 utilizes the predictive module 154 to alter a grade of the perishable goods 104 when the future need is present. Furthermore, the management sub-system 150 utilizes the remaining life module 156 to alter a grade of the perishable goods 104 when a remaining life of the perishable goods 104 indicates spoiling prior to or soon after delivery to an original destination.

At block 225, the marketplace and bidding mechanism posts the perishable goods 104 for subsequent sale by the marketplace and bidding mechanism. In an embodiment, the management sub-system 150 can manage an interface that buyers can access so as to bid on the downgraded perishable goods 104. The interface can be any user interface, software portal, or computer tool that enables bidding, sale, resale, negations, and/or communications with respect to the perishable goods 104 (e.g., multiple buyers can sell, purchase, and/or reroute the perishable goods 104 in real-time before they spoil or arrive at an original destination). For example, the user interface can be website or a collection of related web pages, including multimedia content, published on at least computer server connected to the network 134. The website via the computer server may be accessible via a public Internet Protocol (IP) network, such as the Internet, or a private local area network (LAN), such as an intranet, by referencing a uniform resource locator (URL) that identifies the site.

Within the context of the interface, the management sub-system 150 can offer the perishable goods 104, which were downgraded in block 220, for subsequent sale to another buyer at a reduced or fractional price. Within the context of the interface, buyers can actively browse and purchase the perishable goods 104 that were downgraded in block 220 at a reduced or fractional price. The reduced or fractional price can be proportional to the grade given in block 220 and/or altered based on bidding and/or negotiations within the interface.

Once a purchase is complete, the management sub-system 150 can automatically reroute shipments of perishable goods 104. The management sub-system 150 can support the selling, purchasing, and/or rerouting of the perishable goods 104 by suggesting buyers who may have a need for the management sub-system 150 (e.g., animal farmer local to where the perishable goods 104 were downgraded).

In view of the above, an example operation of the process flow 200 will now be described. The management sub-system 150 identifies that a cargo of perishable goods 104 have been purchased from a grower by a first buyer. Further, the management sub-system 150 identifies that the cargo is going from the grower to a location (e.g., original destination) determined by the first buyer. The management sub-system 150 then pulls in real-time the transport parameters 122 (e.g., one or more inputs) from the sensors 120 through the communications module 132, while the cargo is being moved by the transport refrigeration system 102. The management sub-system 150 performs on-going quality assessments of the transport parameters 122 (and in turn the cargo) to provides a holistic understanding and analysis of the perishable goods 104 moving through from the grower harvest to the original destination (e.g., the cold chain process). If at any point during the cold chain process the management sub-system 150 determines that a quality of the cargo has dropped, the management sub-system 150 decrement a grade of the perishable goods 104. This decrease in grade will allow the first buyer 1 to trade that shipment with a second buyer 2 within the interface, where the second buyer can see the grade. Upon completion of the online trade, the management sub-system 150 sends updated navigation data to an operator of the transport refrigeration system 102 to re-route the cargo to a second destination.

Turning now to FIG. 3, a process flow 300 of the management sub-system 150, operating as a marketplace and bidding mechanism, is illustrated according to an embodiment. The process flow 300 begins at block 301, where the management sub-system 150 performs an initial quality assessment of perishable goods 104. The initial quality assessment can be utilized as a baseline for providing feedback information during subsequent operations of the management sub-system 150.

At block 305, inputs with respect to perishable goods 104 are received by the management sub-system 150. At block 310, a quality assessment during a transit period utilizing the input of block 205 is performed by the management sub-system 150. At block 315, the management sub-system 150 determines whether a cold chain in-transit exchange of the perishable goods should occur based the quality assessment.

As shown in FIG. 3, if the cold chain in-transit exchange of the perishable goods is not required according to the determination of block 315, the process flow 300 loops back to block 305 (as indicated by the 'NO' arrow). However, if the cold chain in-transit exchange of the perishable goods is required, the process flow 300 proceeds to block 320 (as indicated by the 'YES' arrow). At block 320, the management sub-system 150 decrements a grade of the perishable goods. At block 325, the management sub-system 150 posts the perishable goods 104 for subsequent sale.

At block 330, the management sub-system 150 provides subsequent buyer suggestions. The management sub-system 150 can provide the subsequent buyer suggestions based on feedback information. The feedback information can comprise the initial quality assessment of block 301, the inputs of block 305 (e.g., real time transport parameters 122), and the on-going quality assessments of block 310. The feedback information can also comprise weather, hedging based logistics, and road changes so that the management sub-system 150 can automatically identify if a quality of perishable goods 104 is not going to meet requirements upon arrival at the original destination. The subsequent buyer suggestions can, in turn, be buyers that are located closer to an originating location of the cargo than the original destination. The subsequent buyer suggestions can be provided to a grower or original seller of the perishable goods 104. These subsequent buyers themselves can also be notified. In turn, the grower or original seller and subsequent buyers can all be party to a bidding operation for the cargo.

At block 335, the management sub-system 150 executes the bidding operation for the perishable goods 104. Subsequent buyers can actively browse, purchase, bid and/or negotiate within the interface for rights to the perishable goods 104. The interface can start the bidding at a reduced or fractional price that is proportional to the grade given in block 320. The price can be altered based on the feedback information.

At block 340, the management sub-system 150 reroutes the perishable goods 104 based on the bidding operation. Once a purchase is complete, the management sub-system 150 can automatically reroute shipments of perishable goods 104.

The technical effects and benefits of the marketplace and bidding mechanism includes enabling multiple parties can sell, purchase, and/or reroute perishable goods before they spoil or arrive at (e.g., while in transit to) an original destination. The technical effects and benefits of the marketplace and bidding mechanism also include enabling the use of weather, hedging based logistics, and road changes to automatically identify if a quality of perishable goods is not going to meet requirements upon arrival at the original destination. The technical effects and benefits of the marketplace and bidding mechanism also include enabling the use of suggestions as to whether to reroute shipments of perishable goods to support the selling, purchasing, and/or rerouting of perishable goods. The marketplace and bidding mechanism is necessarily routed in a computing system to provide holistic understanding and analysis of perishable goods moving through the cold chain process so as to solve perishable goods being wasting and completely losing their market value.

While the disclosure has been described in detail in connection with only a limited number of embodiments, it should be readily understood that the invention is not limited to such disclosed embodiments. Rather, the disclosure can be modified to incorporate any number of variations, alterations, substitutions or equivalent arrangements not heretofore described, but which are commensurate with the scope of the invention as defined by the claims. Accordingly, the invention is not to be seen as limited by the foregoing description, but is only limited by the scope of the appended claims.

## Claims

1. A system (100) for facilitating a cold chain in-transit exchange of perishable goods (104), the system comprising:
a transport refrigeration system (102) for the perishable goods comprising an environmentally controlled container (106), a transport refrigeration unit (108) associated with the container to provide desired environmental parameters, and sensors (120) configured to monitor transport parameters (122) internal and external to the container and/or the transport refrigeration unit, wherein the transport parameters comprise one or more of temperature, pressure, humidity, carbon dioxide, ethylene, ozone, light exposure, speed, location, external temperature and vibrations;
a storage device (142) configured to store data associated with the perishable goods,
wherein the data comprises the transport parameters;
a management sub-system (150) comprising a processor and a memory, the management sub-system coupled to the storage device, wherein the management sub-system is configured to:
receive an input comprising the data associated with the perishable goods,
perform a quality assessment utilizing the input during a transit period wherein the perishable goods are in-transit to an original destination in the transport refrigeration system,
determine whether the cold chain in-transit exchange of the perishable goods should occur based on the quality assessment, **characterized in that** the management sub-system is further configured to:
post the perishable goods for subsequent sale in response to determining that the cold chain in-transit exchange of the perishable goods should occur, and
reroute the transport refrigeration system to a second destination in response to a subsequent sale of the perishable goods.

2. The system of claim 1, wherein the management sub-system (150) is configured to decrement a grade of the perishable goods (104) in response to determining that the cold chain in-transit exchange of the perishable goods should occur.

3. The system of any preceding claim, wherein the grade of the perishable goods (104) indicates a present quality of the goods.

4. The system of any preceding claim, wherein the data comprises historical transport parameters and perishable goods history.

5. The system of any preceding claim, wherein the perishable goods (104) comprise one or more of fruits, vegetables, grains, beans, nuts, eggs, dairy, seed, flowers, meat, poultry, fish, ice, blood, and pharmaceuticals.

6. The system of any preceding claim, wherein the management sub-system (150) comprises a diagnostic module (152) configured to perform the quality assessment utilizing the data based on when one or more spoil conditions are present.

7. The system of any preceding claim, wherein the management sub-system (150) comprises a predictive module (154) configured to perform the quality assessment utilizing the data based on when a future need for the cold chain in-transit exchange is present.

8. The system of any preceding claim, wherein the management sub-system (150) comprises a remaining life module (156) configured to perform the quality assessment utilizing the data based on when a remaining life of the perishable goods (104) indicates spoiling prior to or soon after delivery to an original destination.

9. A method for facilitating a cold chain in-transit exchange of perishable goods (104), the method comprising:
monitoring, using sensors (120), transport parameters (122) internal and external to an environmentally controlled container (106) and/or a transport refrigeration unit (108) of a transport refrigeration system (102) for the perishable goods, wherein the transport parameters comprise one or more of temperature, pressure, humidity, carbon dioxide, ethylene, ozone, light exposure, speed, location, external temperature and vibrations;
storing, using a storage device (142), data associated with the perishable goods, wherein
the data comprises the transport parameters;
receiving (205; 305), by a management sub-system (150), an input comprising the data associated with the perishable goods, wherein the management sub-system comprises a processor and a memory and is coupled to the storage device;
performing (210; 310), by the management sub-system, a quality assessment utilizing the input during a transit period wherein the perishable goods are in-transit to an original destination in the transport refrigeration system;
determining (215; 315) whether the cold chain in-transit exchange of the perishable goods should occur based on the quality assessment; **characterized by** the management sub-system (150) further performing:
posting (225; 325), by the management sub-system, the perishable goods for subsequent sale in response to determining that the cold chain in-transit exchange of the perishable goods should occur; and
rerouting the transport refrigeration system to a second destination in response to a subsequent sale of the perishable goods.

10. The method of claim 9, the method comprising:
decrementing (220; 320) a grade of the perishable goods (104) in response to determining that the cold chain in-transit exchange of the perishable goods should occur.

## Patentansprüche

1. System (100) zur Erleichterung eines Kühlkettenaustausches von verderblichen Gütern (104) während des Transports, wobei das System umfasst:
ein Transportkühlsystem (102) für verderbliche Güter, umfassend einen Behälter mit kontrollierten Umgebungsbedingungen (106), eine Transportkühleinheit (108), die dem Behälter zugeordnet ist, um gewünschte Umgebungsparameter bereitzustellen, und Sensoren (120), die konfiguriert sind, um Transportparameter (122) innerhalb und außerhalb des Behälters und/oder der Transportkühleinheit zu überwachen, wobei die Transportparameter eines oder mehr umfassen von Temperatur, Druck, Feuchtigkeit, Kohlendioxid, Ethylen, Ozon, Lichteinwirkung, Geschwindigkeit, Örtlichkeit, Außentemperatur und Schwingungen;
eine Speichervorrichtung (142), die konfiguriert ist, um Daten zu speichern, die den verderblichen Gütern zugeordnet sind,
wobei die Daten die Transportparameter umfassen;
ein Verwaltungsteilsystem (150), umfassend einen Prozessor und einen Speicher, wobei das Verwaltungsteilsystem mit der Speichervorrichtung gekoppelt ist, wobei das Verwaltungsteilsystem konfiguriert ist zum:
Empfangen einer Eingabe, umfassend die Daten, die den verderblichen Gütern zugeordnet sind,
Durchführen einer Qualitätsbewertung durch Verwenden der Eingabe in einem Transportzeitraum, in dem die verderblichen Güter beim Transport zu einem ursprünglichen Ziel im Transportkühlsystem sind,
Bestimmen, ob der Kühlkettenaustausch von verderblichen Gütern während des Transports stattfinden sollte, basierend auf der Qualitätsbewertung, **dadurch gekennzeichnet, dass** das Verwaltungsteilsystem weiter konfiguriert ist zum:
Versenden der verderblichen Güter zum anschließenden Verkauf als Reaktion auf das Bestimmen, dass der Kühlkettenaustausch von verderblichen Gütern während des Transports stattfinden sollte, und
Umleiten des Transportkühlsystems zu einem zweiten Ziel als Reaktion auf einen anschließenden Verkauf der verderblichen Güter.

2. System nach Anspruch 1, wobei das Verwaltungsteilsystem (150) konfiguriert ist, um eine Güteklasse der verderblichen Güter (104) als Reaktion auf das Bestimmen, dass der Kühlkettenaustausch von verderblichen Gütern während des Transports stattfinden sollte, zu verringern.

3. System nach einem vorstehenden Anspruch, wobei die Güteklasse der verderblichen Güter (104) auf eine gegenwärtige Qualität der Güter hinweist.

4. System nach einem vorstehenden Anspruch, wobei die Daten historische Transportparameter und eine Historie von verderblichen Gütern umfassen.

5. System nach einem vorstehenden Anspruch, wobei die verderblichen Güter (104) eines oder mehr umfassen aus Obst, Gemüse, Getreide, Bohnen, Nüssen, Eiern, Milchprodukten, Saatgut, Blumen, Fleisch, Geflügel, Fisch, Eis, Blut und Arzneimitteln.

6. System nach einem vorstehenden Anspruch, wobei das Verwaltungsteilsystem (150) ein Diagnosemodul (152) umfasst, das konfiguriert ist, um die Qualitätsbewertung durch Verwenden der Daten darauf basierend durchzuführen, wann eine oder mehrere Beeinträchtigungsbedingungen gegenwärtig sind.

7. System nach einem vorstehenden Anspruch, wobei das Verwaltungsteilsystem (150) ein Vorschaumodul (154) umfasst, das konfiguriert ist, um die Qualitätsbewertung durch Verwenden der Daten darauf basierend durchzuführen, wann ein künftiger Bedarf nach Kühlkettenaustausch während des Transports gegenwärtig ist.

8. System nach einem vorstehenden Anspruch, wobei das Verwaltungsteilsystem (150) ein Restnutzungsdauermodul (156) umfasst, das konfiguriert ist, um die Qualitätsbewertung durch Verwenden der Daten darauf basierend durchzuführen, wann eine Restnutzungsdauer der verderblichen Güter (104) auf eine Beeinträchtigung vor oder kurz nach der Lieferung am ursprünglichen Ziel hinweist.

9. Verfahren zur Erleichterung eines Kühlkettenaustausches von verderblichen Gütern (104) während des Transports, wobei das Verfahren umfasst:
Überwachen, durch Verwenden von Sensoren (120), von Transportparametern (122) innerhalb und außerhalb eines Behälters mit kontrollierten Umgebungsbedingungen (106) und/oder einer Transportkühleinheit (108) eines Transportkühlsystems (102) für die verderblichen Güter, wobei die Transportparameter eines oder mehr umfassen von Temperatur, Druck, Feuchtigkeit, Kohlendioxid, Ethylen, Ozon, Lichteinwirkung, Geschwindigkeit, Örtlichkeit, Außentemperatur und Schwingungen;
Speichern, durch Verwenden einer Speichervorrichtung (142), von Daten, die den verderblichen Gütern zugeordnet sind,
wobei die Daten die Transportparameter umfassen;
Empfangen (205; 305) durch ein Verwaltungsteilsystem (150) einer Eingabe, umfassend die Daten, die den verderblichen Gütern zugeordnet sind, wobei das Verwaltungsteilsystem einen Prozessor und einen Speicher umfasst, und mit der Speichervorrichtung gekoppelt ist;
Durchführen (210; 310) durch das Verwaltungsteilsystem einer Qualitätsbewertung durch Verwenden der Eingabe in einem Transportzeitraum, in dem die verderblichen Güter beim Transport zu einem ursprünglichen Ziel in dem Transportkühlsystem sind;
Bestimmen (215; 315), ob der Kühlkettenaustausch von verderblichen Gütern während des Transports stattfinden sollte, basierend auf der Qualitätsbewertung; **dadurch gekennzeichnet, dass** das Verwaltungsteilsystem (150) weiter Folgendes durchführt:
Versenden (225; 325), durch das Verwaltungsteilsystem, der verderblichen Güter zum anschließenden Verkauf als Reaktion auf das Bestimmen, dass der Kühlkettenaustausch der verderblichen Güter während des Transports stattfinden sollte; und
Umleiten des Transportkühlsystems zu einem zweiten Ziel als Reaktion auf einen anschließenden Verkauf der verderblichen Güter.

10. Verfahren nach Anspruch 9, wobei das Verfahren umfasst:
Verringern (220; 320) einer Güteklasse der verderblichen Güter (104) als Reaktion auf das Bestimmen, dass der Kühlkettenaustausch von verderblichen Gütern während des Transports stattfinden sollte.

## Revendications

1. Système (100) pour faciliter un échange de denrées périssables en transit sur une chaîne de froid (104), le système comprenant :
un système de réfrigération de transport (102) pour les denrées périssables comprenant un conteneur à environnement commandé (106), une unité de réfrigération de transport (108) associée au conteneur pour fournir des paramètres environnementaux souhaités, et des capteurs (120) configurés pour surveiller des paramètres de transport (122) internes et externes au conteneur et/ou à l'unité de réfrigération de transport, dans lequel les paramètres de transport comprennent un ou plusieurs parmi la température, la pression, l'humidité, le dioxyde de carbone, l'éthylène, l'ozone, l'exposition à la lumière, la vitesse, l'emplacement, la température externe et les vibrations ;
un dispositif de stockage (142) configuré pour stocker des données associées aux denrées périssables,
dans lequel les données comprennent les paramètres de transport ;
un sous-système de gestion (150) comprenant un processeur et une mémoire, le sous-système de gestion étant couplé au dispositif de stockage, dans lequel le sous-système de gestion est configuré pour :
recevoir une entrée comprenant les données associées aux denrées périssables,
effectuer une évaluation de qualité en utilisant l'entrée durant une période de transit dans lequel les denrées périssables sont en transit vers une destination d'origine dans le système de réfrigération de transport,
déterminer si l'échange des denrées périssables en transit sur une chaîne de froid doit avoir lieu sur la base de l'évaluation de qualité, **caractérisé en ce que** le sous-système de gestion est en outre configuré pour :
afficher les denrées périssables pour vente ultérieure en réponse à la détermination que l'échange des denrées périssables en transit sur une chaîne de froid doit avoir lieu, et
réacheminer le système de réfrigération de transport jusqu'à une seconde destination en réponse à une vente ultérieure des denrées périssables.

2. Système selon la revendication 1, dans lequel le sous-système de gestion (150) est configuré pour diminuer un grade des denrées périssables (104) en réponse à la détermination que l'échange des denrées périssables en transit sur une chaîne de froid doit avoir lieu.

3. Système selon une quelconque revendication précédente, dans lequel le grade des denrées périssables (104) indique une qualité actuelle des denrées.

4. Système selon une quelconque revendication précédente, dans lequel les données comprennent des paramètres de transport historiques et un historique de denrées périssables.

5. Système selon une quelconque revendication précédente, dans lequel les denrées périssables (104) comprennent un ou plusieurs parmi des fruits, des légumes, des céréales, des haricots, des noix, des oeufs, des produits laitiers, des graines, des fleurs, de la viande, de la volaille, du poisson, de la glace, du sang, et des produits pharmaceutiques.

6. Système selon une quelconque revendication précédente, dans lequel le sous-système de gestion (150) comprend un module de diagnostic (152) configuré pour effectuer l'évaluation de qualité en utilisant les données basées sur le moment où une ou plusieurs conditions de détérioration sont présentes.

7. Système selon une quelconque revendication précédente, dans lequel le sous-système de gestion (150) comprend un module de prédiction (154) configuré pour effectuer l'évaluation de qualité en utilisant les données basées sur le moment où un besoin futur de l'échange en transit sur une chaîne de froid sera présent.

8. Système selon une quelconque revendication précédente, dans lequel le sous-système de gestion (150) comprend un module de durée de vie restante (156) configuré pour effectuer l'évaluation de qualité en utilisant les données basées sur le moment où une durée de vie restante des denrées périssables (104) indique une détérioration avant ou rapidement après livraison à une destination d'origine.

9. Procédé pour faciliter un échange de denrées périssables en transit sur une chaîne de froid (104), le procédé comprenant les étapes consistant à :
surveiller, à l'aide de capteurs (120), des paramètres de transport (122) internes et externes à un conteneur à environnement commandé (106) et/ou une unité de réfrigération de transport (108) d'un système de réfrigération de transport (102) pour les denrées périssables, dans lequel les paramètres de transport comprennent un ou plusieurs parmi la température, la pression, l'humidité, le dioxyde de carbone, l'éthylène, l'ozone, l'exposition à la lumière, la vitesse, l'emplacement, la température externe et les vibrations ;
stocker, à l'aide d'un dispositif de stockage (142), des données associées aux denrées périssables,
dans lequel les données comprennent les paramètres de transport ;
recevoir (205 ; 305), par un sous-système de gestion (150), une entrée comprenant les données associées aux denrées périssables, dans lequel le sous-système de gestion comprend un processeur et une mémoire et est couplé au dispositif de stockage ;
effectuer (210 ; 310), par le sous-système de gestion, une évaluation de qualité en utilisant l'entrée durant une période de transit dans lequel les denrées périssables sont en transit vers une destination d'origine dans le système de réfrigération de transport ;
déterminer (215 ; 315) si l'échange des denrées périssables en transit sur une chaîne de froid doit avoir lieu sur la base de l'évaluation de qualité ; **caractérisé par** le sous-système de gestion (150) effectuant en outre les étapes consistant à :
afficher (225 ; 325), par le sous-système de gestion, les denrées périssables pour vente ultérieure en réponse à la détermination que l'échange des denrées périssables en transit sur une chaîne de froid doit avoir lieu ; et
réacheminer le système de réfrigération de transport jusqu'à une seconde destination en réponse à une vente ultérieure des denrées périssables.

10. Procédé selon la revendication 9, le procédé comprenant les étapes consistant à :
diminuer (220; 320) un grade des denrées périssables (104) en réponse à la détermination que l'échange des denrées périssables en transit sur une chaîne de froid doit avoir lieu.
